# EUROPEAN PATENT SPECIFICATION

(11) **EP 0 539 895 B1**
(45) Date of publication and mention of the grant of the patent: **03.01.1996**
(21) Application number: 92118253.1
(22) Date of filing: 26.10.1992
(51) Int. Cl.: G02F 1/1335

(54) **Vertical orientation type dot matrix liquid crystal display**
Punktmatrix-Flüssigkristallanzeige mit vertikaler Molekülausrichtung
Dispositif d'affichage à matrice de points à cristal liquide du type à orientation verticale

(30) Priority: 28.10.1991 JP 96286/91 U
(43) Date of publication of application: 05.05.1993
(73) Proprietor: Stanley Electric Co., Ltd., Meguro-ku Tokyo 153 (JP)
(72) Inventor: Aizawa, Masanobu, Yokohama-shi, Kanagawa-ken (JP); Isikawa, Seiichi, Hiratsuka-shi, Kanagawa-ken (JP); Kanagawa, Shinji, Kunitachi-shi, Tokyo (JP); Nakamura, Sathoshi, Zama-shi, Kanagawa-ken (JP); Hirose, Shin-Ichi, Isehara-shi, Kanagawa-ken (JP)
(74) Representative: Dr. Elisabeth Jung Dr. Jürgen Schirdewahn Dipl.-Ing. Claus Gernhardt

(56) References cited:
- EP-A- 0 385 419
- GB-A- 2 153 575
- US-A- 4 105 288
- SID INTERNATIONAL SYMPOSIUM, DIGEST OF TECHNICAL PAPERS vol. XX, May 1989, BALTIMORE, USA, pp. 378-381, XP76892; S. YAMAUCHI et al.: 'Homeotropic-Alignment Full-Color LCD'
- DISPLAYS vol. 2, no. 7, October 1981, GUILDFORD, GB, pp. 341-347; F. CLERC: 'Electro-Optical Limits of the Electrically Controlled Birefringence Effect in Nematic Liquid Crystals'

## Description

### BACKGROUND OF THE INVENTION

### 1. Field of the Invention

The present invention relates generally to a vertical orientation type dot matrix liquid crystal display. More particularly, the present invention relates to improvement of a liquid crystal display of the foregoing type which makes it possible to reliably prevent light beam from leaking from edge portions of each pixel.

### 2. Background Art

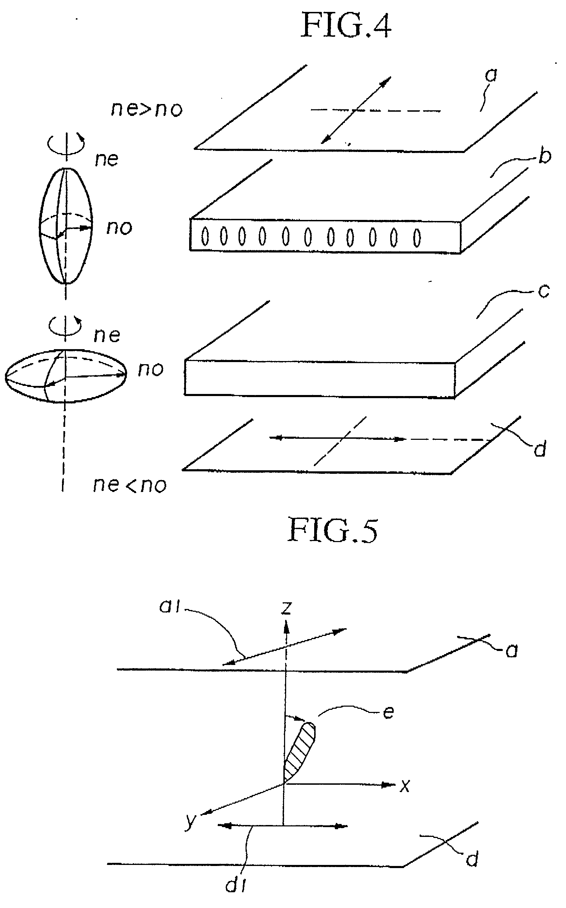

A conventional vertical orientation type dot matrix liquid crystal display is typically constructed as illustrated in Fig. 4 to Fig. 9. This liquid crystal display includes as essential components a polarizer a, a liquid crystal cell b, an optical compensating plate c for correcting a visual angle and an analyzer d. In this connection, two rotational elliptical bodies are shown on the left-hand side in Fig. 4. Specifically, an upper rotational elliptical body shows optical properties of the liquid crystal cell b, while a lower rotational elliptical body shows optical properties of the optical compensating plate c. Referring to both the rotational elliptical bodies shown in Fig. 4, a normal light component is represented by no and an abnormal light component is represented by ne. As is apparent from Fig. 4, the liquid crystal cell b exhibits a positive optical anisotropy, and the optical compensating plate c exhibits a negative optical anisotropy.

As shown in Fig. 5, a polarizer axis al of the polarizer a and an analyzer axis d1 of the analyzer d extend at a right angle relative to each other. In Fig, 5, reference character e designates a liquid crystal molecule.

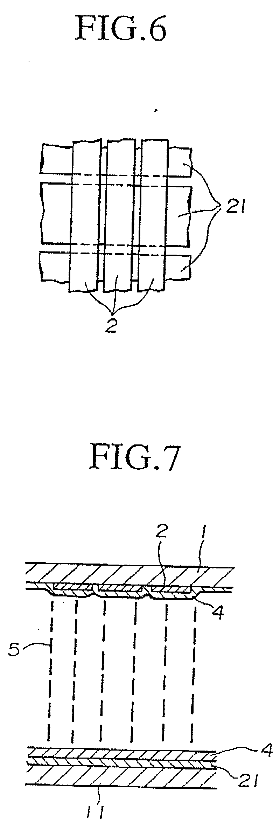

Fig. 6 and Fig. 7 show the structure of each electrode in the liquid crystal cell b in the case of a monochromatic panel. An upper glass base plate 11 includes a number of upper transparent electrodes 2 on the opposite surface to a lower glass base plate 11, while the lower glass base plate 11 located opposite to the upper glass base plate 1 includes a number of transparent electrodes 21 which extend at a right angle relative to the transparent electrodes 2 on the upper glass base plate 1. Each of the transparent electrodes 2 and 21 is covered with an orientation film 4.

A conventional liquid crystal display constructed as described above is disclosed by SID International Symposium, Digest of Technical Papers vol.XX, May 1989, Baltimore, USA; pages 378-381, XP 76892; S. Yamauchi et al. "Homeotropic-Alignment Full-color LCD". EP-A-0 385 419 discloses a dot matrix liquid crystal display device in which a shading layer is divided into a plurality of segments partially overlying its row and/or column electrodes.

However, the conventional liquid crystal display constructed as described above has the following problems.

A first problem will be described below.

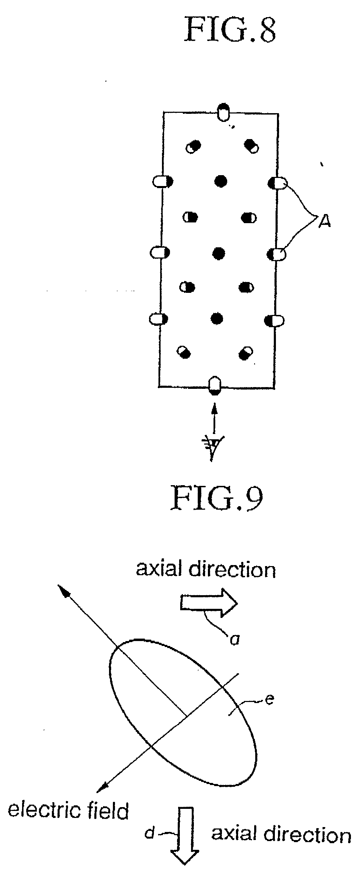

While the display surface of the liquid crystal display constructed of a simple matrix is turned off, a very small magnitude of voltage (off-voltage) is applied to the display surface. This causes a very small amount of light beam to leak from the display surface even when the latter is turned off. The phenomenon of light leakage appears more intensely at edge portions of each pixel, since an electric field is slantwise applied thereto (see Fig. 8). Thus, molecules at the edge portions of each pixel are tilted as illustrated by reference character A in Fig. 8. At this time, a polarizing plate of the polarizer a is arranged as shown in Fig. 5 so as to comparatively easily prevent an occurrence of light leakage but the arrangement of the polarizing plate in that way is not sufficient from the viewpoint of complete prevention of the light leakage.

Next, a second problem will be described below.

While the display surface of the liquid crystal display is turned off, molecules in the display surface are tilted as illustrated by reference character A in Fig. 8 as mentioned above. When the foregoing state is visually observed in the arrow-marked direction in Fig. 8, the positional relationship between liquid crystal molecules at the right-hand edge portion of each pixel and the polarizing plate of the polarizer a is recognized as illustrated in Fig. 9. Because of the foregoing positional relationship, there arises a problem that light leakage occurs at the edge portions of each pixel when the visual angle is changed to another one.

Finally, a third problem is concerned with remarkable occurrence of crosstalk attributable to the fact that ITO is hitherto often used as a material for the transparent electrodes, causing resistance of each electrode to be reduced with difficulty.

### SUMMARY OF THE INVENTION

The present invention has been made in consideration of the aforementioned problems to be solved.

An object of the present invention is to provide a vertical orientation type dot matrix liquid crystal display which makes it possible to reliably prevent light beam from leaking from edge portions of each pixel while the display surface thereof is turned off.

According to the present invention, there is provided a vertical orientation type dot matrix liquid crystal display which comprises a first glass base plate; a number of first transparent electrodes arranged on the inner surface of the first glass base plate; a second glass base plate located opposite to the first glass base plate; a number of second transparent electrodes arranged on the inner surface of the second glass base plate located opposite to the inner surface of the first glass base plate, the second transparent electrodes extending at a right angle relative to the first transparent electrodes so as to form pixel areas consisting of the areas where said first transparent electrodes intersect said second transparent electrodes; a liquid crystal layer filled in the space between the first glass base plate and the second glass base plate; and a number of metallic light shielding masks deposited on the second transparent electrodes, each of the metallic light shielding masks having windows formed thereon with dimensions slightly smaller than those of each pixel area, the windows being located at the positions of said pixel areas.

Alternatively, a number of metallic light shielding masks may additionally be deposited on the first transparent electrode on the inner surface of the first glass base plate in the same manner as defined above.

In practical use, the first glass base plate is an upper glass base plate and the second glass base plate is a lower glass base plate.

The metallic light shielding masks are usually deposited on the corresponding transparent electrodes by executing a step of patterning using molybdenum as a metallic material.

It is recommendable that a photolithographying process is employed for executing the step of patterning.

Other objects, features and advantages of the present invention will become apparent from reading of the following description which has been made in conjunction with the accompanying drawings.

### BRIEF DESCRIPTION OF THE DRAWINGS

The present invention is illustrated in the following drawings in which:
Fig. 1 is a fragmentary plan view of a vertical orientation type dot matrix liquid crystal display in accordance with an embodiment of the present invention, particularly illustrating the structure of each electrode in a liquid crystal cell;
Fig. 2 is a fragmentary front view of the liquid crystal display shown in Fig. 1, particularly illustrating the structure of each electrode in the liquid crystal cell;
Fig. 3 is a process chart which illustrates a series of steps for forming a number of metallic light shielding masks on the lower glass base plate side;
Fig. 4 is a perspective of a conventional vertical orientation type dot matrix liquid crystal display, particularly illustrating essential components constituting the liquid crystal display in the disassembled state;
Fig. 5 is a schematic perspective view of the conventional liquid crystal display shown in Fig. 4, particularly illustrating the positional relationship between a polarizer and an analyzer in the liquid crystal display in the disassembled state;
Fig. 6 is a plan view of the conventional liquid crystal display, particularly illustrating the structure of each electrode in a liquid crystal cell in the case of a conventional monochromatic panel;
Fig. 7 is a front view of the conventional liquid crystal display, particularly illustrating the structure of each electrode in the liquid crystal cell in the case of a conventional monochromatic panel;
Fig. 8 is an illustrative view which schematically shows how molecules in the liquid crystal cell are oriented while the display surface of the liquid crystal display is turned off; and
Fig. 9 is an illustrative view which schematically shows the relationship between liquid crystal molecules at edge portions of each pixel and a polarizing plate of a polarizer.

### DETAILED DESCRIPTION OF THE PREFERRED EMBODIMENTS

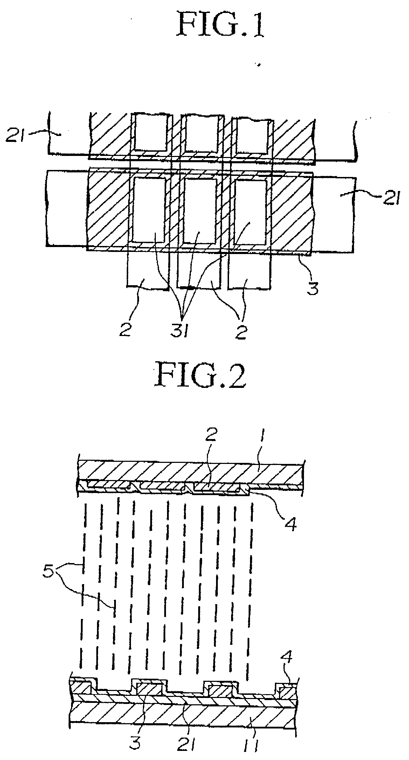

The present invention will now be described in detail hereinafter with reference to Fig. 1 to Fig. 3 which illustrates a preferred embodiment of the present invention. It should be noted that same component as those constituting the conventional liquid crystal display described above with reference to Fig. 4 to Fig. 9 are represented by same reference numerals.

A number of upper transparent electrodes 2 are arranged on an upper glass base plate 1, and a number of lower transparent electrodes 21 are likewise arranged on a lower glass base plate 11 located opposite to the upper glass base board 1 in such a manner that they extend at a right angle relative to the upper transparent electrodes 2.

To reliably prevent light beam from leaking from edge portions of each pixel while the display surface of the liquid crystal display is turned off, a number of metallic light shielding masks 3 each having a window 31 formed thereon with dimensions slightly smaller than those of each pixel are deposited on the lower transparent electrodes 21.

The hollow space between the upper glass base plate 1 and the lower glass base plate 11 is filled with a liquid crystal layer 5.

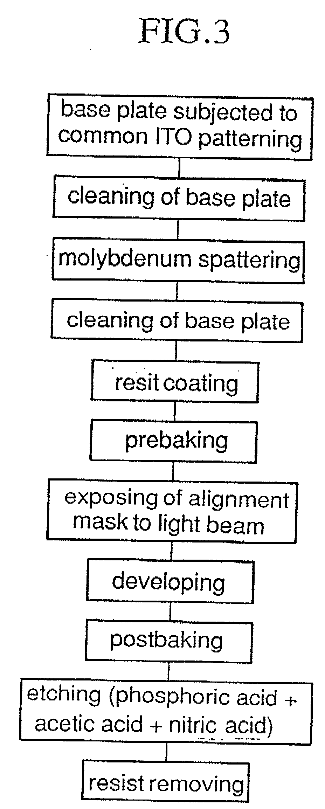

Fig. 3 shows by way of example a process chart employable for forming the metallic shielding masks 3. In the shown case, molybdenum is employed as a metallic material required for forming the metallic light shielding masks 3, and a step of patterning is executed by employing an ordinary photolithographying process.

Advantageous effects of the liquid crystal display constructed in accordance with the embodiment of the present invention in the above-described manner will be noted below.

The arrangement of the metallic light shielding masks in that way makes it possible to reliably prevent light beam from leaking from edge portions of each pixel while the display surface of the liquid crystal display is turned off, and moreover, improve optical contrast visually recognizable on the liquid crystal display.

There does not arise a malfunction that light leakage occurs at the edge portions of each pixel when the present visual angle is changed to another one. Thus, an available visual angle can be widened.

Resistance of each electrode on the lower glass base plate side can be reduced owing to the arrangement of the metallic light shielding masks, resulting an occurrence of crosstalk being reliably prevented.

While the present invention has been described above only with respect to a single preferred embodiment thereof, it should of course be understood that the present invention should not be limited only to this embodiment but various change or modification may be made without departure from the scope of the present invention as defined by the appended claims.

## Claims

1. A vertical orientation type dot matrix liquid crystal display comprising;
a first glass base plate (1),
a number of first transparent electrodes (2) arranged on the inner surface of said first glass base plate,
a second glass base plate (11) located opposite to said first glass base plate,
a number of second transparent electrodes (21) arranged on the inner surface of said second glass base plate located opposite to the inner surface of said first glass base plate, said second transparent electrodes extending at a right angle relative to said first transparent electrodes so as to form pixel areas consisting of the areas where said first transparent electrodes intersect said second transparent electrodes,
a liquid crystal layer (5) filled in the space between said first glass base plate and said second glass base plate,
characterised by a number of metallic light shielding masks (3) deposited on said second transparent electrodes, each of said metallic light shielding masks having windows (31) formed thereon with dimensions slightly smaller than those of each pixel area, said windows being located at the positions of said pixel areas.

2. The vertical orientation type dot matrix liquid crystal display according to claim 1, wherein said first glass base plate is an upper glass base plate and said second glass base plate is a lower glass base plate.

3. The vertical orientation type dot matrix liquid crystal display according to claim 1, wherein said metallic light shielding masks are deposited on said second transparent electrodes by executing a step of patterning.

4. The vertical orientation type dot matrix liquid crystal display according to claim 3, wherein a photolithographying process is employed for executing said step of patterning.

5. A vertical orientation type dot matrix liquid crystal display comprising;
a first glass base plate (1),
a number of first transparent electrodes (2) arranged on the inner surface of said first glass base plate,
a second glass base plate (11) located opposite to said first glass base plate,
a number of second transparent electrodes (21) arranged on the inner surface of said second glass base plate located opposite to the inner surface of said first glass base plate, said second transparent electrodes extending at a right angle relative to said first transparent electrodes so as to form pixel areas consisting of the areas where said first transparent electrodes intersect said second transparent electrodes,
a liquid crystal layer (5) filled in the space between said first glass base plate and said second glass base plate,
characterised by a number of first metallic light shielding masks deposited on said first transparent electrodes, each of said first metallic light shielding masks having windows formed thereon with dimensions slightly smaller than those of each pixel area, said windows being located at the positions of said pixel areas, and
a number of second metallic light shielding masks deposited on said second transparent electrodes, each of said second metallic light shielding masks having windows formed thereon with dimensions slightly smaller than those of each pixel area, said windows being located at the positions of said pixel areas.

## Patentansprüche

1. Punktmatrix-Flüssigkristallanzeige vom Vertikalausrichtungstyp, umfassend;
eine erste Glasbasisplatte (1),
eine Anzahl erster transparenter Elektroden (2), die auf der Innenfläche der ersten Glasbasisplatte angeordnet sind,
eine zweite Glasbasisplatte (11), die sich gegenüberliegend der ersten Glasbasisplatte befindet,
eine Anzahl zweiter transparenter Elektroden (21), die auf der Innenfläche der zweiten Glasbasisplatte angeordnet sind, die sich gegenüberliegend der Innenfläche der ersten Glasbasisplatte befindet, wobei sich die zweiten transparenten Elektroden in einem rechten Winkel in bezug auf die ersten transparenten Elektroden erstrecken, um Pixelbereiche zu bilden, die aus den Bereichen bestehen, wo die ersten transparenten Elektroden die zweiten transparenten Elektroden schneiden,
eine Flüssigkristallschicht (5), die in dem Raum zwischen der ersten Glasbasisplatte und der zweiten Glasbasisplatte gefüllt ist,
gekennzeichnet durch eine Anzahl von metallischen Lichtabschirmmasken (3), die auf den zweiten transparenten Elektroden abgesetzt sind, wobei jede der metallischen Lichtabschirmmasken darauf gebildete Fenster (31) mit Abmessungen etwas kleiner als denjenigen jedes Pixelbereichs aufweist, wobei sich die Fenster an den Positionen der Pixelbereiche befinden.

2. Punktmatrix-Flüssigkristallanzeige vom Vertikalausrichtungstyp nach Anspruch 1, bei der die erste Glasbasisplatte eine obere Glasbasisplatte und die zweite Glasbasisplatte eine untere Glasbasisplatte ist.

3. Punktmatrix-Flüssigkristallanzeige vom Vertikalausrichtungstyp nach Anspruch 1, bei der die metallischen Lichtabschirmmasken auf den zweiten transparenten Elektroden durch Ausführung eines Musterungsschrittes abgesetzt werden.

4. Punktmatrix-Flüssigkristallanzeige vom Vertikalausrichtungstyp nach Anspruch 3, bei der ein Photolithographieprozeß zur Ausführung des Musterungsschrittes verwendet wird.

5. Punktmatrix-Flüssigkristallanzeige vom Vertikalausrichtungstyp, umfassend;
eine erste Glasbasisplatte (1),
eine Anzahl erster transparenter Elektroden (2), die auf der Innenfläche der ersten Glasbasisplatte angeordnet sind,
eine zweite Glasbasisplatte (11), die sich gegenüber der ersten Glasbasisplatte befindet,
eine Anzahl zweiter transparenter Elektroden (21), die auf der Innenfläche der zweiten Glasbasisplatte angeordnet sind, die sich gegenüberliegend der ersten Innenfläche der ersten Glasbasisplatte befindet, wobei sich die zweiten transparenten Elektroden in einem rechten Winkel in bezug auf die ersten transparenten Elektroden erstrecken, um Pixelbereiche zu bilden, die aus den Bereichen bestehen, wo die ersten transparenten Elektroden die zweiten transparenten Elektroden schneiden,
eine Flüssigkristallschicht (5), die in den Raum zwischen der ersten Glasbasisplatte und der zweiten Glasbasisplatte gefüllt ist,
gekennzeichnet durch eine Anzahl erster metallischer Lichtabschirmmasken, die auf den ersten transparenten Elektroden abgesetzt sind, wobei jede der ersten metallischen Lichtabschirmmasken Fenster aufweist, die darauf mit Abmessungen etwas kleiner als denjenigen jedes Pixelbereichs gebildet sind, wobei sich die Fenster an den Positionen der Pixelbereiche befinden, und
eine Anzahl zweiter metallischer Lichtabschirmmasken, die auf den zweiten transparenten Elektroden abgesetzt sind, wobei jede der zweiten metallischen Lichtabschirmmasken Fenster aufweist, die darauf mit Abmessungen etwas kleiner als denjenigen jedes Pixelbereichs gebildet sind, wobei sich die Fenster an den Positionen der Pixelbereiche befinden.

## Revendications

1. Dispositif d'affichage à matrice de points à cristal liquide du type à orientation verticale comprenant :
une première plaque de base en verre (1),
un certain nombre de premières électrodes transparentes (2) disposées sur la surface interne de ladite première plaque de base en verre,
une seconde plaque de base en verre (11) située en face de ladite première plaque de base en verre,
un certain nombre de secondes électrodes transparentes (21) disposées sur la surface interne de ladite seconde plaque de base en verre située en face de la surface interne de ladite première plaque de base en verre, lesdites secondes électrodes transparentes s'étendant selon un angle droit par rapport auxdites premières électrodes transparentes de manière à former des zones de pixels correspondant aux zones d'intersection desdites premières électrodes transparentes avec lesdites secondes électrodes transparentes,
une couche de cristal liquide (5) comblant l'espace entre ladite première plaque de base en verre et ladite seconde plaque de base en verre,
caractérisé par un certain nombre de masques métalliques formant écran à la lumière (3) déposés sur lesdites secondes électrodes transparentes, chacun desdits masques métalliques formant écran à la lumière étant percé de fenêtres (31) dont les dimensions sont légèrement inférieures à celles de chaque zone de pixel, lesdites fenêtres étant situées aux positions correspondant auxdites zones de pixels.

2. Dispositif d'affichage à matrice de points à cristal liquide du type à orientation verticale selon la revendication 1, dans lequel ladite première plaque de base en verre est une plaque de base en verre supérieure et ladite seconde plaque de base en verre est une plaque de base en verre inférieure.

3. Dispositif d'affichage à matrice de points à cristal liquide du type à orientation verticale selon la revendication 1, dans lequel lesdits masques métalliques formant écran à la lumière sont déposés sur lesdites secondes électrodes transparentes en exécutant une étape d'impression de formes.

4. Dispositif d'affichage à matrice de points à cristal liquide du type à orientation verticale selon la revendication 3, dans lequel un procédé de photolitographie est utilisé pour exécuter ladite étape d'impression de formes.

5. Dispositif d'affichage à matrice de points à cristal liquide du type à orientation verticale comprenant :
une première plaque de base en verre (1),
un certain nombre de premières électrodes transparentes (2) disposées sur la surface interne de ladite première plaque de base en verre,
une seconde plaque de base en verre (11) située en face de ladite première plaque de base en verre,
un certain nombre de secondes électrodes transparentes (21) disposées sur la surface interne de ladite seconde plaque de base en verre située en face de la surface interne, de ladite première plaque de base en verre, lesdites secondes électrodes transparentes s'étendant selon un angle droit par rapport auxdites premières électrodes transparentes de manière à former des zones de pixels correspondant aux zones d'intersection desdites premières électrodes transparentes avec lesdites secondes électrodes transparentes,
une couche de cristal liquide (5) comblant l'espace entre ladite première plaque de base en verre et ladite seconde plaque de base en verre,
caractérisé par un certain nombre de premiers masques métalliques formant écran à la lumière déposés sur lesdites premières électrodes transparentes, chacun desdits premiers masques métalliques formant écran à la lumière étant percé de fenêtres dont les dimensions sont légèrement inférieures àcelles de chaque zone de pixel, lesdites fenêtres étant situées aux positions correspondant auxdites zones de pixels, et
un certain nombre de seconds masques métalliques formant écran à la lumière déposés sur lesdites secondes électrodes transparentes, chacun desdits seconds masques métalliques formant écran à la lumière étant percé de fenêtres dont les dimensions sont légèrement inférieures à celles de chaque zone de pixel, lesdites fenêtres étant situées aux positions correspondant aux zones de pixels.
